# FASCICULE DE BREVET EUROPEEN

(11) **EP 4 332 688 B1**
(45) Date de publication et mention de la délivrance du brevet: **15.04.2026**
(21) Numéro de dépôt: 23180216.6
(22) Date de dépôt: 20.06.2023
(51) Int. Cl.: G04B 19/12, B22D 23/00, B22F 3/00, C23C 4/00, G04B 19/18, G04B 37/22, G04B 45/00, G04B 19/10, B22F 10/25, B22F 7/06, B33Y 10/00, C04B 41/00, C04B 41/51, C04B 41/88, C23C 24/08, C23C 28/02, C23C 28/00, B22F 10/66, B33Y 80/00

(54) **COMPOSANT HORLOGER INCRUSTÉ ET SON PROCÉDÉ DE FABRICATION**
EINGELEGTE UHRENKOMPONENTE UND VERFAHREN ZU IHRER HERSTELLUNG
EMBEDDED TIMEPIECE COMPONENT AND METHOD FOR MANUFACTURING SAME

(30) Priorité: 02.09.2022 FR 2208820
(43) Date de publication de la demande: 06.03.2024
(73) Titulaire: Comadur SA, 2400 Le Locle (CH)
(72) Inventeur: ION PUIU, Alberto, 87100 Limoges (FR); ROSSIGNOL, Fabrice, 87700 Saint Priest sous Aixe (FR); DE LOS COBOS, Olivia, 90500 Beaucourt (FR); NETUSCHILL, Alexandre, 2414 Le Cerneux-Péquignot (CH)
(74) Mandataire: ICB SA

(56) Documents cités:
- EP-A1- 3 078 436
- EP-B1- 2 856 903
- CH-B1- 711 152

## Description

### Domaine technique de l'invention

L'invention se rapporte à un composant horloger incrusté d'au moins un décor métallique et/ou céramique et à son procédé de fabrication.

### Arrière-plan technologique

Il est connu de former des composants horlogers tels que des lunettes de montre au moins partiellement en céramique, en métal ou composite pour montrer un dépôt effectué dans un creux sous la lunette formant par exemple une graduation ou une dénomination commerciale. Cette configuration à l'avantage de protéger le dépôt de toute dégradation mécanique par recouvrement total de la partie en saphir. Cependant, cette configuration peut rendre difficile la lecture du décor par la transmission altérée de la coloration du dépôt mais également par le manque de différence de la teinte du saphir par rapport à celle du dépôt.

Pour pallier à ces inconvénients, il a été proposé un élément céramique incrusté comportant un corps en céramique comportant au moins un évidement formant l'empreinte d'un décor, ledit au moins un évidement étant entièrement rempli par une première et une deuxième couche électriquement conductrices de sensiblement 50 nm et un dépôt galvanique métallique afin de former un élément céramique incrusté d'au moins un décor métallique à la qualité visuelle améliorée.

Cependant, la réalisation d'une telle pièce reste complexe, coûteuse, chronophage et il est nécessaire de mettre en place une couche d'accroche (couche conductrice) pour réaliser les décors. De plus, il est compliqué de remplir parfaitement les cavités formant un décor ou une graduation tout en obtenant un aspect visuel irréprochable.

Le document EP 2 856 903 B1 montre un procédé de fabrication d'un élément céramique incrusté d'une pièce d'horlogerie.

### Résumé de l'invention

L'invention a notamment pour objectif de pallier les différents inconvénients de l'art antérieur.

A cet effet, l'invention concerne un composant horloger incrusté comportant un corps en matériau métallique et/ou céramique comportant au moins un évidement formant l'empreinte d'un décor. Selon l'invention ledit au moins un évidement est entièrement rempli par des strates successives formées par une agglomération de particules via une métallisation à froid afin de former un composant horloger incrusté d'au moins un décor.

Conformément à d'autres variantes avantageuses de l'invention :
- les particules formant les strates sont métalliques et/ou au moins partiellement en céramique et sont choisies parmi : le cuivre, le zinc, l'étain, le titane, le niobium, le zirconium, le tantale, le chrome, le fer et ses alliages, la zircone ou l'alumine ;
- chaque au moins un évidement comporte une profondeur d'au moins 100 µm, et de préférence de 200µm ;
- l'au moins un décor est recouvert d'une couche métallique colorée au moyen d'une anodisation ;
le composant horloger est un élément d'habillage tels qu'une lunette, un fond, un cadran, une carrure, un maillon de bracelet, une couronne, un poussoir.

L'invention concerne également une pièce d'horlogerie comportant au moins un composant horloger incrusté conforme à l'invention.

L'invention concerne aussi un procédé de fabrication d'un composant horloger incrusté comportant les étapes suivantes :
a) former un corps en matériau métallique et/ou céramique ;
b) graver au moins un évidement dans une face du corps en, chaque au moins un évidement formant l'empreinte d'un décor ;
c) déposer une première strate d'un revêtement sur une épaisseur d'au moins 10µm sur l'ensemble de la face comportant ledit au moins un évidement par procédé de projection à froid, dit « cold spray », d'un flux comprenant un gaz porteur et de particules formant le revêtement ;
d) répéter l'étape c) une ou plusieurs fois pour déposer une ou plusieurs strates supplémentaires de 20µm chacune sur l'ensemble de la face comportant ledit au moins un évidement en recouvrement de la première strate afin de remplir complètement ledit au moins un évidement et former un décor incrusté ;
e) effectuer un polissage pour retirer tous les dépôts des strates de la surface du corps afin de n'en laisser que dans l'au moins un évidement.

Conformément à d'autres variantes avantageuses du procédé selon l'invention :
- le flux du gaz porteur a un débit compris entre 85 et 90m3/h, à une pression comprise 45 et 60 bar et à une température comprise entre 800 et 1000°C ;
- les particules sont en métal ou alliage métallique, céramique ou cermets ;
- le débit massique des particules est compris entre 70 et 80g/min ;
- la taille des particules est au maximum de 45µm ;
- la taille des particules est comprise entre 1 et 25µm ;
- le procédé comprend une étape optionnelle entre l'étape b) et c) au cours de laquelle l'évidement est gravé ou texturé via un laser pour améliorer l'adhésion des particules ;
- le procédé comprend une étape optionnelle après l'étape e) au cours de laquelle une anodisation des décors est effectuée pour colorer lesdits décors.

### Brève description des figures

D'autres caractéristiques et avantages de l'invention apparaîtront à la lecture de la description détaillée suivante donnée à titre d'exemple nullement limitatif, en référence aux dessins annexés dans lesquels :
- la figure 1 représente une vue en coupe d'un composant horloger recouvert de plusieurs strates ;
- la figure 2 représente une vue en coupe d'un composant horloger selon l'invention
- la figure 3 représente une vue de dessus d'une lunette pour pièce d'horlogerie obtenue via un procédé selon l'invention.

### Description détaillée de l'invention

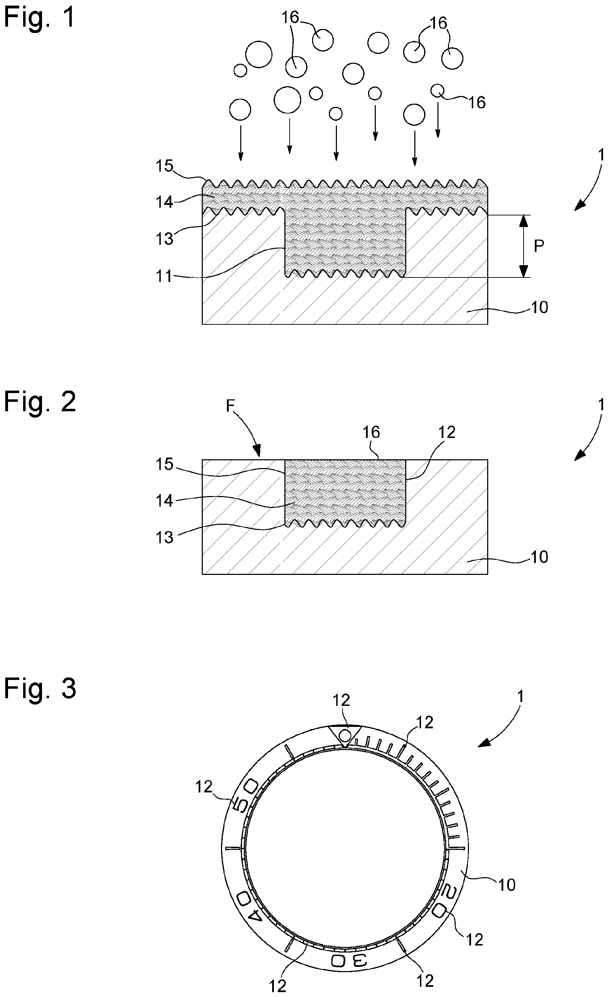

Dans l'exemple illustré à la figure 1, on peut voir un composant horloger 1. Le composant horloger incrusté 1 comprend un corps 10 en matériau métallique et/ou céramique comportant au moins un évidement 11 formant l'empreinte d'un décor 12. L'au moins un évidement 11 est entièrement rempli par des strates successives 13, 14, 15 formées par une agglomération de particules 16 via une métallisation à froid, plus communément appelée « cold spray » afin de former un composant horloger 1 incrusté d'au moins un décor 12.

La technique de métallisation à froid ou « cold spray » consiste à accélérer au-delà d'une vitesse critique un matériau d'apport (300 à 1500 m/s) sous forme de poudre ou particules. Ces vitesses entrainent une déformation plastique et/ou une fragmentation à l'impact de ce matériau sur un substrat à traiter, qui est suffisamment importante pour former un revêtement dense et adhérent. Les températures des gaz de projection sont faibles (typiquement comprises entre 300 à 1100 °C) en comparaison des températures utilisées dans d'autres procédés. La matière avant impact n'est donc pas fondue. Les matériaux céramiques sont aussi projetables.

Dans la suite de la description, seul le cas d'une lunette 1 sera décrit mais il va de soi que la description est applicable pour tout autre composant horloger, et plus particulièrement les pièces d'habillage d'une pièce d'horlogerie tels qu'un fond, un cadran, une carrure, une couronne, une masse oscillante ou encore un poussoir.

Dans l'exemple illustré ci-après, l'explication de l'invention sera donc donnée à partir d'un anneau 10 en matériau céramique comportant des décors métalliques 12 incrustés formant les graduations d'une lunette 4. Bien évidemment une lunette en métal ou alliage métallique, en cermet ou encore en matériau composite est également possible.

La lunette 1 incrustée est destinée à former une pièce très résistante à l'usure comportant au moins un décor métallique présentant une excellente qualité visuelle et dont la durabilité dans le temps est améliorée.

Comme illustré à la figure 2, le composant horloger incrusté 1 comporte un corps 10 en céramique comportant au moins un évidement 11 formant l'empreinte d'un décor 12. A la figure 3, on peut voir que chaque décor 12 peut être de forme quelconque, comme, par exemple, une figure géométrique ou un caractère alphanumérique. Selon l'invention, chaque évidement 11 est entièrement rempli par une pluralité de strates 13, 14, 15 d'une épaisseur comprise entre 10 et 50µm. Cette configuration permet de protéger chaque décor métallique 12 dans le corps 11 en céramique lequel est très résistant à l'usure.

Chaque évidement 11 comporte une profondeur P comprise entre 100 et 200 µm et leur surface interne peut présenter une forme géométrique variée. On peut par exemple imaginer un évidement sous la forme d'une étoile, d'un rectangle ou d'un triangle, voire même d'une lettre.

Le corps 10 est obtenu à partir d'une grande variété de matériaux, notamment en céramique. Une céramique à base de zircone est préférentiellement utilisée pour ses propriétés mécaniques, sa capacité de polissage et, dans une moindre mesure, pour sa capacité à offrir une large palette de teintes. Il est bien entendu évident que d'autres céramiques sont envisageables, comme, par exemple, à base de carbure de titane, ou encore les céramiques polycristallines transparentes à base d'alumine ou de spinelle.

Selon un autre mode de réalisation, le corps 10 est obtenu à partir d'un matériau métallique ou d'un alliage métallique.

Les particules formant les strates sont métalliques et/ou au moins partiellement en céramique et sont choisies parmi : le cuivre, le zinc, l'étain, le titane, le niobium, le zirconium, le tantale, le chrome, le fer, la zircone ou l'alumine. Selon une variante de l'invention, des strates en matériaux différents sont utilisées, par exemple une première partie des strates peut être réalisée en zinc puis la seconde partie en titane. Une telle alternative permet de réduire les coûts de fabrication.

La première strate 13 comporte une épaisseur de sensiblement 20µm et est située dans le fond de l'évidement 11. De manière similaire, la deuxième strate 15 et les strates suivantes présentent une épaisseur croissante ou identique selon les besoins de l'homme du métier. La première strate peut par exemple présenter une épaisseur de 20µm, la deuxième strate 30µm, la troisième 30µm, la quatrième 40µm, la cinquième 50µm ... La succession de strates se poursuit jusqu'à ce que l'évidement soit complètement rempli.

De plus, selon l'invention, le rendu visuel de chaque décor 12 peut être modifié localement en colorant la dernière strate, à savoir la strate affleurante avec la surface du composant horloger, via une anodisation 16 par exemple, lorsque le corps 10 est réalisé en céramique.

A ce titre, pour faciliter l'anodisation, au moins la dernière des strates métalliques est réalisée de préférence en aluminium ou en titane.

Dans le cas d'un corps 10 métallique, la partie remplissage ne posera pas de problème, mais la coloration via une oxydation anodique de coloration à l'échelle locale ne sera pas faisable, le corps 10 et la dernière strate étant tous les deux conducteurs. Il est alors envisageable de déposer la dernière strate avec un léger retrait par rapport à la surface du corps 10, puis d'effectuer une oxydation anodique de coloration sur toute la pièce et enfin d'enlever le surplus à la surface du corps via une opération de polissage par exemple. (autre option :mettre en place un masque via un procédé LIGA).

L'invention concerne également un procédé de fabrication d'un composant horloger incrusté.

Le procédé de fabrication d'un composant horloger incrusté 10 va maintenant être expliqué. Dans la suite de la description, seul le cas de la fabrication d'une lunette 1 sera décrit mais il va de soi que la description applicable pour tout autre composant horloger comme détaillé précédemment. L'explication du procédé selon l'invention sera donc donnée à partir d'un anneau 10 en matériau céramique comportant des décors métalliques 12 incrustés formant les graduations d'une lunette 1.

Dans une première étape a), le procédé consiste à former le corps 10 en céramique, par exemple, en zircone. Dans le cas d'un composant à base de céramique, ce dernier est obtenu préférentiellement par frittage. A la fin de l'étape a), le corps 10 comporte ses dimensions finales.

Le procédé comporte une deuxième étape b) destinée à graver au moins un évidement 11 qui peut être borgne dans une face F du corps 10, les évidements 11 formant l'empreinte des futurs décors 12 comme visible à la figure 1. Chaque évidement 11 comporte une profondeur P minimale de 100µm, et de préférence une profondeur de 200 µm. Chaque évidement 11 peut présenter une forme géométrique variée en fonction des besoins de l'homme du métier. On peut par exemple imaginer un évidement sous la forme d'une étoile, d'un rectangle ou d'un triangle, voire même d'un caractère alphanumérique.

L'étape b) est généralement obtenue au moyen d'une ablation laser permettant une bonne précision des gravures. Selon une étape optionnelle, à la fin de l'étape b) l'au moins un évidement est gravé ou texturé via un laser pour améliorer l'adhésion des particules dans la suite du procédé.

Le procédé se poursuit selon une troisième étape c) destinée à déposer une première strate 13 d'une épaisseur égale à 20µm sur l'ensemble de la face F, c'est-à-dire y compris dans chacun des évidements 11 comme visible à la figure 1.

La troisième étape c) du procédé consiste à revêtir la face F par une métallisation à froid plus communément appelée « cold spray ». Il est ainsi possible de déposer une couche de particule qui adhère parfaitement au corps 10 sans la présence d'une couche d'adhésion.

Les particules projetées sont en métal ou alliage métallique, en céramique ou encore en cermets.

Pour former le dépôt sur le substrat 10, on projette les particules au moyen d'un gaz porteur au travers d'une buse de pulvérisation de type de Laval pour accélérer ces dernières et les projeter à haute vitesse pour les faire adhérer au substrat.

Dans l'exemple illustré, on projette des particules de titane d'une taille comprise entre 1 et 50µm, et de préférence une taille de particule dans la plage de 5 à 25µm, et encore plus préférentiellement d'une taille de 20 µm.

Le gaz principal est envoyé au travers de la buse à un débit entre 80 et 90m³/heure, le débit pouvant être amené à varier en fonction de la buse et du gaz utilisé. Généralement l'hélium et l'azote sont utilisés seuls ou en combinaison. L'hélium a pour avantage de permettre un travail à des températures plus basses que l'azote, et l'azote a pour avantage d'être meilleur marché.

La température du gaz porteur se situe dans une plage de 900°C à 1000°C, et la pression de pulvérisation se situe dans une plage 45 à 60 bar.

Dans le cas de de particule en titane, une température de 1000°C et une pression de 50 bar permettent d'obtenir de très bon résultats.

Les particules sont envoyées dans la buse à un débit allant de 70 à 80g/min, et de préférence à un débit de 75g/h. La vitesse des particules est ainsi comprise entre 800 et 1000m/s.

La buse de pulvérisation est maintenue à distance de l'ordre de 50mm de la surface F de la lunette 1 et progresse à une vitesse de 0.15m/sec lors de la dépose de chaque strate.

Dans le cas d'un substrat matière céramique, l'homme du métier veillera à adapter les paramètres du procédé lors du dépôt de la première strate. La matière céramique est relativement fragile et les particules doivent être projetées à une vitesse moindre pour éviter de fissurer et/ou casser le substrat. Ainsi au cours de la dépose de la première strate, les particules sont envoyées dans la buse à un débit de 20g/min, la pression, le débit et la température du gaz porteur restant les mêmes.

Le procédé se poursuit par une quatrième étape d) au cours de laquelle on répète l'étape c) une ou plusieurs fois pour déposer une ou plusieurs strates supplémentaires 14,15 d'au moins 20µm chacune sur l'ensemble de la face F comportant l'au moins un évidement 11 en recouvrement de la première strate 13. L'étape c) est répétée jusqu'à remplir complètement l'au moins un évidement 11 et former un décor 12 incrusté dans la lunette 1.

Enfin, dans une cinquième étape e), le procédé se termine en retirant les strates 13, 14 et 15 déposées sur la surface F du corps 10 afin de n'en laisser qu'au niveau de chaque évidement 11 comme visible à la figure 2. Le composant horloger incrusté 10 est ainsi terminé et n'a, éventuellement, plus qu'à être monté sur une pièce finale. Cette étape peut être obtenue par une méthode de surfaçage habituelle comme un meulage ou un rodage pour enlever le surplus de matière suivit d'un polissage.

Le procédé selon l'invention, peut également prévoir une dernière étape optionnelle destinée à déposer une métallisation afin de colorer les décors 12. Une telle couche peut, par exemple, être réalisée via une anodisation.

Bien entendu, la présente invention ne se limite pas à l'exemple illustré et est susceptible de diverses variantes et modifications qui apparaîtront à l'homme de l'art, sans sortir du cadre de l'invention tel que définie par les revendications.

## Revendications

1. Composant horloger incrusté (1) comportant un corps (10) en matériau métallique et/ou céramique comportant au moins un évidement (11) formant l'empreinte d'un décor (12) **caractérisé en ce que** ledit au moins un évidement est entièrement rempli par des strates successives (13, 14, 15) formées par une agglomération de particules (16) via une métallisation à froid afin de former le composant horloger (1) incrusté d'au moins un dit décor (12).

2. Composant horloger incrusté (1) selon la revendication 1, dans lequel les particules (16) formant les strates sont métalliques et/ou au moins partiellement en céramique et sont choisies parmi : le cuivre, le zinc, l'étain, le titane, le niobium, le zirconium, le tantale, le chrome, le fer, la zircone ou l'alumine.

3. Composant horloger incrusté (1) selon l'une des revendications 1 à 2, dans lequel chaque au moins un évidement (11) comporte une profondeur de 200 µm.

4. Composant horloger incrusté (1) selon l'une des revendications 1 à 3, **caractérisé en ce que** l'au moins un décor (12) est recouvert d'une couche (18) métallique colorée au moyen d'une anodisation.

5. Composant horloger incrusté (1) selon l'une des revendications 1 à 4, **caractérisé en ce que** le composant horloger est un élément d'habillage tels qu'une lunette, un fond, un cadran, une carrure, un maillon de bracelet, une couronne, un poussoir.

6. Pièce d'horlogerie (1) **caractérisée en ce qu'**elle comporte au moins un composant horloger incrusté (10) conforme à l'une des revendications précédentes.

7. Procédé de fabrication d'un composant horloger incrusté (10) comportant les étapes suivantes :
a) former un corps (10) en matériau métallique et/ou céramique ;
b) graver au moins un évidement (11) dans une face (F) du corps (10) en, chaque au moins un évidement formant l'empreinte d'un décor (12) ;
ledit procédé étant **caractérisé en ce qu'**il comprend les étapes suivantes :
c) déposer une première strate (13) d'un revêtement sur une épaisseur d'au moins 10µm sur l'ensemble de la face (F) comportant ledit au moins un évidement par procédé de projection à froid, dit « cold spray », d'un flux comprenant un gaz porteur et des particules (16) formant ledit revêtement ;
d) répéter l'étape c) une ou plusieurs fois (14) pour déposer une ou plusieurs strates supplémentaires de 20µm chacune sur l'ensemble de la face (F) comportant ledit au moins un évidement en recouvrement de la première strate (14) afin de remplir complètement ledit au moins un évidement et former un décor (12) incrusté ;
e) effectuer un polissage pour retirer tous les dépôts des strates de la surface du corps (10) en afin de n'en laisser que dans l'au moins un évidement.

8. Procédé selon la revendication 7, **caractérisé en ce que** le flux du gaz porteur a un débit compris entre 85 et 90m³/h, à une pression de comprise en 45 et 60 bar et à une température comprise entre 900 et 1000°C.

9. Procédé selon la revendication 7 ou 8, **caractérisé en ce que** les particules sont en métal ou alliage métallique, céramique ou cermets.

10. Procédé selon l'une des revendications 7 à 9, **caractérisé en ce que** le débit massique des particules est de 70 à 80g/min.

11. Procédé selon l'une des revendications 7 à 10, **caractérisé en ce que** la taille des particules est au maximum de 45µm.

12. Procédé selon l'une des revendications 7 à 11, **caractérisé en ce que** la taille des particules est préférentiellement comprise entre 1 et 25µm.

13. Procédé selon l'une des revendications 7 à 12, **caractérisé en ce qu'**il comprend une étape optionnelle entre l'étape b) et c) au cours de laquelle l'évidement est gravé ou texturé via un laser pour améliorer l'adhésion des particules.

14. Procédé selon l'une des revendications 7 à 13, **caractérisé en ce qu'**il comprend une étape optionnelle après l'étape e) au cours de laquelle une anodisation des décors est effectuée pour colorer lesdits décors.

## Patentansprüche

1. Eingelassene Uhrenkomponente (1 ) umfassend einen Körper (10) aus metallischem und/oder keramischem Material, der mindestens eine Aussparung (11) aufweist, die den Abdruck eines Dekors (12) bildet, **dadurch gekennzeichnet, dass** die mindestens eine Aussparung vollständig durch aufeinanderfolgende Schichten (13, 14, 15) ausgefüllt ist, die durch eine Agglomeration von Partikeln (16) mittels Kaltmetallisierung gebildet werden, um die eingelassene Uhrenkomponente (1 ) mit mindestens einem genannten Dekor (12) zu bilden.

2. Eingelassene Uhrenkomponente (1) nach Anspruch 1, bei der die Partikel (16), die die Schichten bilden, metallisch und/oder zumindest teilweise keramisch sind und ausgewählt sind aus: Kupfer, Zink, Zinn, Titan, Niob, Zirkonium, Tantal, Chrom, Eisen, Zirkonoxid oder Aluminiumoxid.

3. Eingelassene Uhrenkomponente (1) nach einem der Ansprüche 1 oder 2, bei der jede der mindestens einen Aussparungen (11) eine Tiefe von 200 µm aufweist.

4. Eingelassene Uhrenkomponente (1) nach einem der Ansprüche 1 bis 3, **dadurch gekennzeichnet, dass** das mindestens eine Dekor (12) mit einer mittels Anodisierung gefärbten metallischen Schicht (18) überzogen ist.

5. Eingelassene Uhrenkomponente (1) nach einem der Ansprüche 1 bis 4, **dadurch gekennzeichnet, dass** die Uhrenkomponente ein Ausstattungselement ist, wie eine Lünette, ein Gehäuseboden, ein Zifferblatt, ein Gehäusemittelteil, ein Armbandglied, eine Krone oder ein Drücker.

6. Uhr (1), **dadurch gekennzeichnet, dass** sie mindestens eine eingelassene Uhrenkomponente (10) nach einem der vorhergehenden Ansprüche aufweist.

7. Verfahren zur Herstellung einer eingelassenen Uhrenkomponente (10), umfassend folgende Schritte:
a) einen Körper (10) aus metallischem und/oder keramischem Material bilden;
b) mindestens eine Aussparung (11) in eine Fläche (F) des Körpers (10) gravieren, wobei jede der mindestens einen Aussparungen den Abdruck eines Dekors (12) bildet;
wobei das Verfahren **dadurch gekennzeichnet ist, dass** es folgende Schritte umfasst:
c) eine erste Schicht (13) einer Beschichtung mit einer Dicke von mindestens 10µm auf der gesamten Fläche (F), die die genannte mindestens eine Aussparung aufweist, mittels eines Kaltstrahlverfahrens, genannt "cold spray", aus einem Strom, der ein Trägergas und Partikel (16) umfasst, welche die genannte Beschichtung bilden, aufbringen;
d) Schritt c) ein- oder mehrmals (14) wiederholen, um eine oder mehrere zusätzliche Schichten von jeweils 20µm auf der gesamten Fläche (F), die die genannte mindestens eine Aussparung aufweist, in Überdeckung der ersten Schicht (14) aufzubringen, um die genannte mindestens eine Aussparung vollständig auszufüllen und ein eingelassenes Dekor (12) zu bilden;
e) einen Polierschritt durchführen, um sämtliche Ablagerungen der Schichten von der Oberfläche des Körpers (10) zu entfernen, sodass diese nur in der mindestens einen Aussparung verbleiben.

8. Verfahren nach Anspruch 7, **dadurch gekennzeichnet, dass** der Trägergasstrom einen Durchsatz zwischen 85 und 90m3/h bei einem Druck zwischen 45 und 60 bar und bei einer Temperatur zwischen 900 und 1000°C aufweist.

9. Verfahren nach Anspruch 7 oder 8, **dadurch gekennzeichnet, dass** die Partikel aus Metall oder Metalllegierung, Keramik oder Cermets sind.

10. Verfahren nach einem der Ansprüche 7 bis 9, **dadurch gekennzeichnet, dass** der Massenstrom der Partikel 70 bis 80g/min beträgt.

11. Verfahren nach einem der Ansprüche 7 bis 10, **dadurch gekennzeichnet, dass** die Partikelgröße höchstens 45µm beträgt.

12. Verfahren nach einem der Ansprüche 7 bis 11, **dadurch gekennzeichnet, dass** die Partikelgröße bevorzugt zwischen 1 und 25µm liegt.

13. Verfahren nach einem der Ansprüche 7 bis 12, **dadurch gekennzeichnet, dass** es einen optionalen Schritt zwischen Schritt b) und c) umfasst, bei dem die Aussparung mittels eines Lasers graviert oder texturiert wird, um die Haftung der Partikel zu verbessern.

14. Verfahren nach einem der Ansprüche 7 bis 13, **dadurch gekennzeichnet, dass** es einen optionalen Schritt nach Schritt e) umfasst, bei dem eine Anodisierung der Dekore durchgeführt wird, um die genannten Dekore zu färben.

## Claims

1. An inlaid timepiece component (1) including a body (10) made of a metallic and/or ceramic material including at least one hollow (11) forming the impression of a decoration (12) **characterised in that** said at least one hollow is completely filled with successive strata (13, 14, 15) formed by an agglomeration of particles (16) via a cold metallisation in order to form the timepiece component (1) inlaid with at least one said decoration (12).

2. The inlaid timepiece component (1) according to claim 1, wherein the particles (16) forming the strata are metallic and/or at least partially made of ceramic and are selected from among: copper, zinc, tin, titanium, niobium, zirconium, tantalum, chromium, iron, zirconia or alumina.

3. The inlaid timepiece component (1) according to one of claims 1 to 2, wherein each at least one hollow (11) includes a depth of 200 µm.

4. The inlaid timepiece component (1) according to one of claims 1 to 3, **characterised in that** the at least one decoration (12) is covered by a metal layer (18) coloured by means of an anodisation.

5. The inlaid timepiece component (1) according to one of claims 1 to 4, **characterised in that** the timepiece component is an external part element such as a bezel, a back, a dial, a middle, a wristlet link, a crown, a push-piece.

6. A timepiece (1) **characterised in that** it includes at least one inlaid timepiece component (10) in accordance with one of the preceding claims.

7. A method for manufacturing an inlaid timepiece component (10) including the following steps:
a) forming a body (10) made of a metallic and/or ceramic material;
b) engraving at least one hollow (11) in a face (F) of the body (10) at each at least one hollow forming the impression of a decoration (12); said method is **characterized in that** it comprises the following steps
c) depositing a first stratum (13) of a coating over a thickness of at least 10 µm over the entire face (F) including said at least one hollow by a process of cold projection, called "cold spray", of a flow comprising a carrier gas and particles (16) forming said coating;
d) repeating step c) once or several times (14) to deposit one or more additional strata of 20 µm each over the entire face (F) including said at least one hollow covered with the first stratum (14) in order to completely fill said at least one hollow and form an inlaid decoration (12);
e) performing a polishing to remove all deposits of the strata off the surface of the body (10) in order to leave them only in the at least one hollow.

8. The method according to claim 7, **characterised in that** the flow of the carrier gas has a flow rate comprised between 85 and 90 m3/h, at a pressure comprised between 45 and 60 bar and at a temperature comprised between 900 and 1,000°C.

9. The method according to claim 7 or 8, **characterised in that** the particles are made of metal or metal alloy, ceramic or cermet.

10. The method according to one of claims 7 to 9, **characterised in that** the mass flow rate of the particles is from 70 to 80 g/min.

11. The method according to one of claims 7 to 10, **characterised in that** the size of the particles is at most 45 µm.

12. The method according to one of claims 7 to 11, **characterised in that** the size of the particles is preferably comprised between 1 and 25 µm.

13. The method according to one of claims 7 to 12, **characterised in that** it comprises an optional step between step b) and c) during which the hollow is engraved or textured via a laser to improve the adhesion of the particles.

14. The method according to one of claims 7 to 13, **characterised in that** it comprises an optional step after step e) during which an anodisation of the decorations is performed to colour said decorations.
